(19) Europäisches Patentamt
European Patent Office
Office européen des brevets

(11) Numéro de publication : **0 081 430**
**B1**

(12) **FASCICULE DE BREVET EUROPÉEN**

(45) Date de publication du fascicule du brevet :
28.08.85

(51) Int. Cl.⁴ : **G 21 C 7/08**

(21) Numéro de dépôt : **82402206.5**

(22) Date de dépôt : **03.12.82**

(54) **Equipements internes supérieurs d'un réacteur nucléaire à eau sous pression.**

(30) Priorité : **04.12.81 FR 8122753**

(43) Date de publication de la demande :
**15.06.83 Bulletin 83/24**

(45) Mention de la délivrance du brevet :
**28.08.85 Bulletin 85/35**

(84) Etats contractants désignés :
**BE DE FR GB IT**

(56) Documents cités :
**FR-A- 2 254 859**
**FR-A- 2 397 043**
**FR-A- 2 399 715**

(73) Titulaire : **FRAMATOME ET CIE.**
**Tour Fiat 1, Place de la Coupole**
**F-92400 Courbevoie (FR)**

(72) Inventeur : **Dejeux, Pol**
**53/55 avenue de la Source**
**F-94130 Nogent-sur-Marne (FR)**
Inventeur : **Alibran, Patrice**
**62 rue Amelot**
**F-75011 Paris (FR)**
Inventeur : **Millot, Jean-Paul**
**1 allée des Roitelets**
**F-78310 Elancourt (FR)**

(74) Mandataire : **Fort, Jacques**
**CABINET PLASSERAUD 84, rue d'Amsterdam**
**F-75009 Paris (FR)**

## Description

L'invention concerne un réacteur nucléaire à eau sous pression.

Un réacteur nucléaire à eau sous pression comporte une cuve renfermant un cœur constitué par des assemblages combustibles prismatiques disposés côte à côte et reposant verticalement sur une plaque de support du cœur transversale par rapport à la cuve.

Au-dessus du cœur est disposée une autre plaque transversale percée d'orifices en face de chacun des assemblages combustibles, appelés « plaque supérieure de cœur ».

Sur la plaque supérieure de cœur, à la verticale de certains assemblages, sont disposés des tubes de guidage des barres de commande.

Ces tubes verticaux reposant par leur extrémité inférieure sur la plaque supérieure du cœur permettent le guidage des barres de commande constituées par des grappes de crayons de grande longueur renfermant un matériau absorbant fortement les neutrons.

Pour la conduite du réacteur, ces barres de commande sont déplacées verticalement de façon à pénétrer plus ou moins profondément dans les assemblages combustibles qui sont équipés de tubes-guides se substituant à certains crayons combustibles pour recevoir et guider les crayons absorbants de la barre de commande à l'intérieur des assemblages combustibles.

Les tubes de guidage disposés au-dessus de la plaque supérieure de cœur sont fixés à leur partie supérieure sur une plaque de support qui est elle-même reliée à la plaque supérieure de cœur par l'intermédiaire d'entretoises alvéolées qui assurent la rigidité de l'ensemble.

Les tubes de guidage, leur plaque de support et les entretoises constituant les équipements internes supérieurs du réacteur occupent la partie supérieure de la cuve.

Les tubes de guidage renferment des dispositifs discontinus et des dispositifs continus permettant le guidage de la barre de commande lors de ses mouvements verticaux pour le pilotage du réacteur ou lors de leur retombée en position d'insertion maximum pour l'arrêt d'urgence du réacteur.

Les dispositifs de guidage discontinus sont constitués par des plaques placées transversalement dans les tubes à des distances régulières dans la partie supérieure de ceux-ci.

Les dispositifs de guidage continus sont constitués par des fourreaux de grande longueur comportant des canaux verticaux de guidage de la barre de commande, placés à la partie inférieure des tubes de guidage.

Pour la mise en fonctionnement du réacteur nucléaire, on charge à l'intérieur de la cuve de celui-ci, l'ensemble des assemblages combustibles constituant le cœur qui viennent reposer sur la plaque support de cœur ; chacun des assemblages combustibles est constitué par un faisceau de crayons combustibles dont l'écartement est maintenu par des entretoises, de façon que dans des plans transversaux, les crayons combustibles constituent un réseau régulier.

L'eau sous pression venant en contact avec les crayons combustibles des assemblages sert à la fois de fluide modérateur et caloporteur.

Dans les réacteurs nucléaires à eau sous pression de type classique, le taux de modération dans le cœur du réacteur, c'est-à-dire le rapport du volume du fluide modérateur par rapport au volume de matériau combustible, est tel que les neutrons produits soient ralentis fortement. Leur spectre d'énergie est dit « thermique ».

En diminuant le taux de modération, on peut obtenir un spectre différent dit « épithermique », les neutrons étant beaucoup moins ralentis.

Le passage d'un type de fonctionnement à un autre peut être obtenu en substituant à des assemblages combustibles de type classique des assemblages permettant d'obtenir un faible taux de modération. Pour cela on utilise un matériau combustible enrichi en matière fissile et on adopte une disposition des crayons combustibles permettant de diminuer le volume libre à l'intérieur de l'assemblage. Pour cela on a par exemple proposé d'utiliser des entretoises constituées par un simple fil métallique en hélice autour des crayons combustibles permettant d'obtenir un rapport volumique modérateur combustible faible.

En disposant dans certaines parties du cœur, en particulier à la périphérie de celui-ci, des assemblages combustibles renfermant un matériau fertile tel que de l'uranium appauvri en uranium 235, dans un réacteur nucléaire fonctionnant avec un spectre de neutrons épithermique, on peut obtenir une certaine production de matériau fissile à partir du matériau fertile.

On a donc imaginé des réacteurs nucléaires, appelés « réacteurs sous-modérés », qui permettent d'obtenir un spectre de neutrons épithermique et d'effectuer une certaine régénération de matériau fissile à partir de matériau fertile.

Cependant, la conception et la construction de tels réacteurs différents des réacteurs à eau sous pression de type classique peuvent entraîner des coûts et des difficultés techniques supplémentaires dans la réalisation d'un programme d'équipement en centrales nucléaires.

D'autre part, il peut être contraignant pour l'exploitant d'avoir l'obligation de faire fonctionner le réacteur constamment en réacteur sous-modéré.

Pour ces raisons, on a pensé à construire des réacteurs nucléaires à eau sous pression qui pourraient fonctionner successivement en réacteur classique et en réacteur sous-modéré.

Le passage d'un type de fonctionnement à un autre pourrait se faire au moment d'un rechargement total du réacteur.

On a donc pensé à utiliser des assemblages combustibles dont la forme extérieure est identique mais dont la disposition et la composition des crayons combustibles sont différentes, pour constituer la charge du réacteur, suivant le type de fonctionnement recherché.

Il est cependant nécessaire d'adapter les équipements internes supérieurs à la charge disposée dans le cœur, puisque ces équipements internes supérieurs comportent des tubes de guidage pour des barres de commande associées à certains des assemblages du cœur. Ces barres de commande sont en effet différentes dans le cas du fonctionnement en réacteur sous-modéré et dans le cas du fonctionnement en réacteur classique.

On n'avait donc pas la possibilité pratique de passer d'un fonctionnement en réacteur classique à un fonctionnement en réacteur sous-modéré.

Le but de l'invention est donc de proposer un réacteur nucléaire à eau sous pression comportant une cuve renfermant un cœur constitué par des assemblages combustibles prismatiques disposés côte à côte et verticalement sous une plaque supérieure de cœur portant un ensemble de tubes de guidage des barres de commande, verticaux, disposés au-dessus de certains assemblages du cœur et fixés par leur extrémité supérieure sur une plaque de support reliée à la plaque supérieure de cœur par des entretoises, l'ensemble constitué par les tubes de guidage et leurs organes de supports étant appelé équipements internes supérieurs du réacteur et les tubes de guidage renfermant des plaques horizontales perforées constituant des dispositifs de guidage discontinus et des fourreaux perforés constituant des dispositifs de guidage continus des barres de commande dans la direction verticale, réacteur nucléaire permettant le passage d'un fonctionnement avec un spectre thermique des neutrons à un fonctionnement avec un spectre épithermique, par simple changement de la charge du cœur.

Dans ce but, le réacteur nucléaire fonctionne soit avec un cœur constitué par un premier type d'assemblages produisant un spectre thermique des neutrons, soit avec un cœur constitué par un second type d'assemblages produisant un spectre de neutrons épithermique, différent du premier type d'assemblages uniquement par la disposition et la composition des crayons combustibles, les plaques et les fourreaux comportant, pour chacun des tubes de guidage, un premier jeu de perforations pour le guidage des barres de commande associées aux assemblages du premier type et un second jeu de perforations pour le guidage des barres de commande associées aux assemblages du second ensemble.

Afin de bien faire comprendre l'invention, on va maintenant décrire à titre d'exemple non limitatif, en se reportant aux figures jointes en annexe, un mode de réalisation des équipements internes supérieurs d'un réacteur nucléaire à eau sous pression dont le cœur renferme des assemblages combustibles à section hexagonale.

La figure 1 représente une vue en coupe par un plan vertical de la cuve d'un réacteur nucléaire à eau sous pression.

La figure 2 représente une vue en élévation des équipements internes supérieurs de ce réacteur.

La figure 3 représente, dans sa partie droite, l'emplacement des perforations dans une plaque de guidage et dans sa partie gauche, l'emplacement des perforations dans des fourreaux de guidage, superposés à la section droite d'un assemblage hexagonal comportant dix-huit tubes-guides.

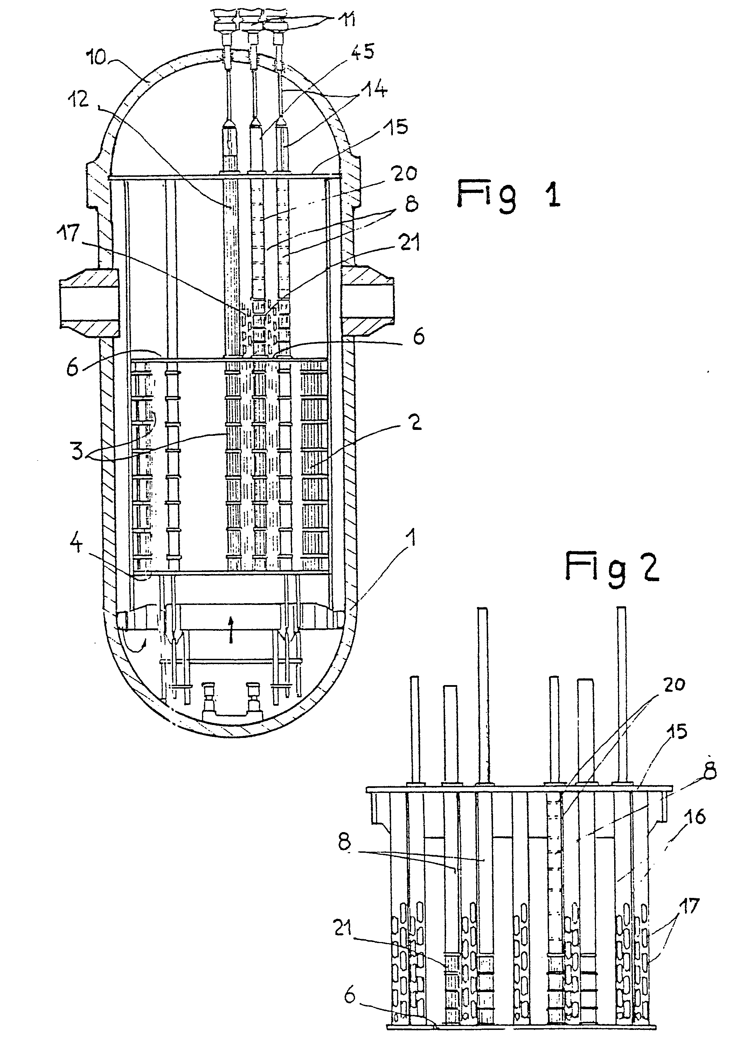

Sur la figure 1, on voit la cuve 1 d'un réacteur nucléaire à eau sous pression à l'intérieur de laquelle est disposé le cœur 2 du réacteur constitué par un ensemble d'assemblages 3 disposés verticalement et reposant sur la plaque inférieure de cœur 4 par l'intermédiaire de leur embout inférieur.

Au-dessus du cœur 2 est disposée la plaque supérieure de cœur 6 percée d'ouvertures au niveau de chacun des assemblages sur laquelle reposent les tubes-guides 8 placés à la verticale de certains des assemblages de cœur.

Au-dessus du couvercle hémisphérique 10 de la cuve sont placés des mécanismes de déplacement 11 des barres de commande 12 qui sont reliées à l'extrémité inférieure de tiges de commande 14, sur lesquelles s'exerce l'action des mécanismes 11.

Les barres de commande 12 peuvent se déplacer à l'intérieur des assemblages 3, à l'intérieur de tubes-guides remplaçant dans le réseau de ces assemblages certains crayons combustibles.

Sur la figure 2, on voit l'ensemble des équipements internes supérieurs du réacteur représenté à la figure 1, comportant les tubes de guidage 8 reposant sur la plaque supérieure de cœur 6.

L'extrémité supérieure des tubes de guidage 8 est reliée à une plaque support 15 parallèle à la plaque 6.

Les plaques 6 et 15 sont reliées entre elles par des entretoises 16 tubulaires et percées d'ouvertures 17 pour la circulation du fluide de refroidissement constitué par l'eau sous pression remplissant la cuve. Grâce à ces entretoises 16, les équipements internes supérieurs forment un ensemble rigide solidaire de la plaque supérieure de cœur.

A l'intérieur de chacun des tubes de guidage 8 et sur toute leur partie supérieure, sont placés des dispositifs de guidage discontinus constitués par des plaques perforées 20 régulièrement espacées suivant la longueur du tube.

La partie inférieure 21 des tubes de guidage constitue un dispositif de guidage continu des barres de commande dont les perforations sont dans le prolongement des perforations des dispositifs discontinus 20. La partie 21 des tubes de guidage est constituée par une enveloppe tubulaire à l'intérieur de laquelle sont fixés des fourreaux occupant toute la hauteur de la zone 21 et comportant des canaux verticaux de guidage de la barre de commande.

Les barres de commande 12 sont constituées chacune par une grappe de crayons absorbants reliés à leur partie supérieure par un croisillon lui- même relié à la partie inférieure de la tige de commande 14.

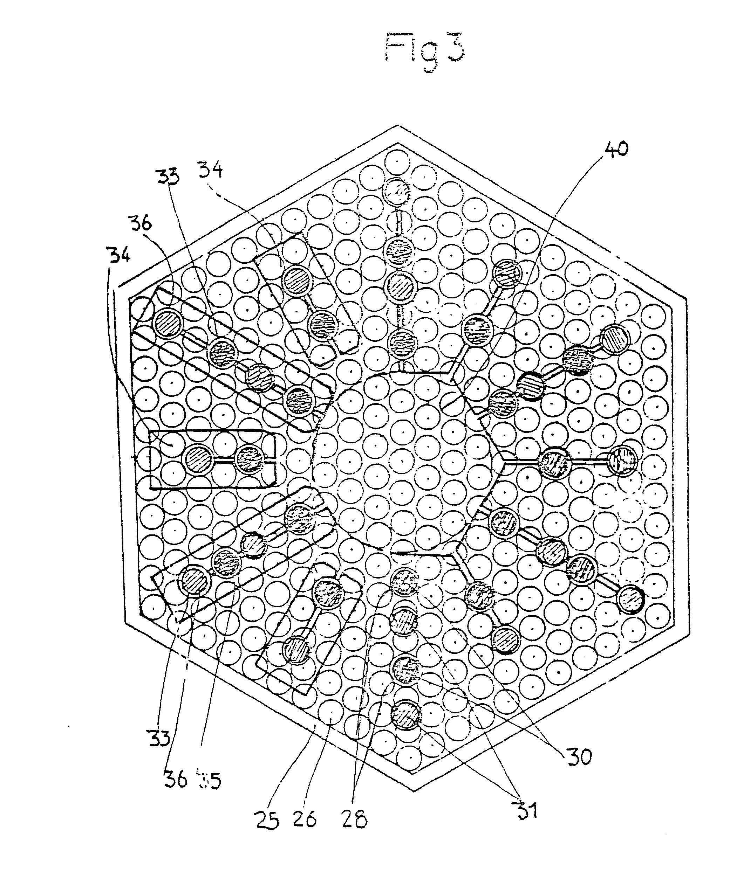

En se reportant à la figure 3, on voit la section droite hexagonale d'un boîtier prismatique 25 d'un assemblage combustible renfermant des crayons combustibles 26 fissiles ou fertiles séparés par des entretoises constituées par un fil métallique enroulé autour de chacun des crayons. De cette façon on obtient un rapport de modération faible et un spectre de neutrons épithermique dans le cœur du réacteur constitué par des assemblages du type représenté à la figure 3.

Pour la réalisation de l'assemblage combustible sous-modéré, on a disposé à l'intérieur du boîtier, les crayons combustibles 26 suivant onze couches successives en partant du centre de l'assemblage, la première couche étant constituée par un crayon disposé suivant l'axe de cet assemblage.

On a réalisé d'autre part des assemblages combustibles conduisant à un rapport de modération supérieur et à un spectre thermique des neutrons dans le cœur du réacteur constitué par ces assemblages, en utilisant le même boîtier dans lequel on a disposé neuf couches successives de crayons renfermant un matériau fertile moins enrichi que celui des crayons 26 et d'un diamètre légèrement supérieur.

Le réseau de ces crayons étant plus dense, la longueur de ces crayons doit être plus faible pour l'obtention d'une puissance donnée à partir du cœur du réacteur constitué par ces assemblages, si on les compare aux assemblages conduisant à l'obtention d'un spectre thermique des neutrons.

Pour pouvoir substituer les assemblages d'un type aux assemblages de l'autre type, il est nécessaire que ces assemblages aient même section et même longueur. On dispose donc à l'extrémité inférieure des assemblages comportant des crayons combustibles plus courts, un embout comportant un prolongateur réalisant en même temps la canalisation de l'eau sous pression à l'intérieur de l'assemblage.

On voit sur la figure 3 qu'à certains crayons combustibles 26 ont été substitués des tubes-guides 28 permettant l'introduction dans l'assemblage des crayons absorbants de la grappe constituant la barre de commande.

Pour l'ensemble d'un assemblage on utilise dix-huit tubes-guides.

On a représenté sur la partie droite de la figure 3, en surimpression au-dessus de la section transversale de l'assemblage, le profil et les perforations des cartes ou plaques de guidage 20 qu'il faut disposer dans la partie supérieure des tubes de guidage 8. On a représenté dans la partie gauche de la figure les sections transversales des fourreaux de guidage correspondants disposés dans la partie 21 des tubes de guidage 8. Ces cartes et fourreaux de guidage comportent des perforations 30 dans le prolongement des tubes-guides 28 de l'assemblage pour réacteurs sous-modérés et des perforations 31 en des positions décalées par rapport aux perforations 30. Ces perforations 31 d'un diamètre un peu plus grand que les perforations 30 servent au guidage des barres de commande associées aux assemblages pour le réacteur dans sa configuration avec spectre de neutrons thermique.

Il n'est pas possible d'utiliser des barres de commande semblables pour les assemblages de l'un et de l'autre type. En effet, les réseaux de crayons combustibles dans l'un et l'autre cas sont décalés, les diamètres des tubes-guides ne sont pas égaux et dans le cas de l'assemblage pour réacteur sous-modéré, il est nécessaire d'éloigner le plus possible les tubes-guides du bord de l'assemblage. En effet, dans ce cas, les tubes-guides qui sont remplis d'eau lorsque les barres de commande n'y sont pas engagées introduisent des zones où le rapport de modération augmente considérablement, ce qui risque d'introduire des pics de puissance dont on veut éviter la présence sur les bords de l'assemblage.

Les tubes-guides 28 sont donc disposés plus près du centre de l'assemblage que les tubes-guides correspondant aux perforations 31.

Chacune des cartes de guidage 20 comporte donc trente-six perforations constituant deux jeux différents qui sont utilisés pour le guidage discontinu de l'un ou de l'autre type de barres de commande.

De la même façon, les fourreaux de guidage tels que 33 comportent chacun deux jeux de deux perforations et les fourreaux de guidage 34 un seul jeu.

L'ensemble des six fourreaux 33 et des six fourreaux 34 pour chacun des tubes de guidage comporte donc trente six canaux de guidage constituant un premier ensemble 35 dans l'alignement des perforations 30 et un second ensemble 36 dans l'alignement des perforations 31.

Chaque carte de guidage comporte un évidement 40 à sa partie centrale pour permettre le passage de la grappe assurant la liaison des crayons absorbants.

De cette manière on peut utiliser les mêmes tubes de guidage et les mêmes équipements internes supérieurs en cas de l'utilisation de l'un et l'autre type d'assemblages correspondant à un type de fonctionnement ou à un autre du réacteur nucléaire.

Pour le passage du réacteur d'un mode de fonctionnement à un autre les équipements internes supérieurs n'ont pas à être modifiés et seule la charge du cœur du réacteur, c'est-à-dire les assemblages combustibles et leurs barres de commande doivent être changés.

On voit donc qu'un des avantages de l'invention est de simplifier la conception et la construction des réacteurs sous-modérés puisqu'il suffit de modifier de façon peu importante les équipements internes supérieurs des réacteurs classiques.

Un autre avantage est de permettre un passage très facile d'un type de fonctionnement à un autre, par simple changement de la charge du réacteur.

L'invention ne se limite pas au mode de réalisation qui vient d'être décrit.

C'est ainsi qu'on peut envisager des cartes et des fourreaux de guidage adaptés à d'autres structures d'assemblages combustibles que celle qui a été décrite où l'assemblage combustible a une section hexagonale, qu'on peut imaginer l'application de l'invention dans le cas d'un nombre de tubes-guides différent dans chacun des assemblages et qu'on peut envisager une répartition différente de ces tubes-guides.

L'invention s'applique à un réacteur nucléaire à eau sous pression quel que soit le nombre de boucles du circuit primaire de ce réacteur.

## Revendications

1. Réacteur nucléaire à eau sous pression comportant une cuve renfermant un cœur constitué par des assemblages combustibles prismatiques disposés côte à côte et verticalement sous une plaque supérieure de cœur (6) portant un ensemble des tubes de guidage (8) des barres de commande, verticaux, disposés au-dessus de certains assemblages du cœur et fixés par leur extrémité supérieure sur une plaque de support (15) reliée à la plaque supérieure de cœur (6) par des entretoises (16), l'ensemble constitué par les tubes de guidage (8) et leurs organes de supports (6, 15, 16) étant appelé équipements internes supérieurs du réacteur et les tubes de guidage (18) renfermant des plaques horizontales perforées (20) constituant des dispositifs de guidage discontinus et des fourreaux perforés (33, 34) constituant des dispositifs de guidage continus des barres de commande dans la direction verticale, caractérisé par le fait que, le réacteur nucléaire fonctionne soit avec un cœur constitué par un premier type d'assemblages produisant un spectre thermique des neutrons, soit avec un cœur constitué par un second type d'assemblages produisant un spectre de neutrons épithermique, différent du premier type d'assemblages uniquement par la disposition et la composition des crayons combustibles, les plaques (20) et les fourreaux (33, 34) comportant, pour chacun des tubes de guidage (8), un premier jeu de perforations (31, 36) pour le guidage des barres de commande associées aux assemblages du premier type et un second jeu de perforations (30, 35) pour le guidage des barres de commande associées aux assemblages du second ensemble.

2. Réacteur nucléaire suivant la revendication 1, caractérisé par le fait que chacune des plaques de guidage (20) comporte deux jeux différents (30, 31) de dix-huit perforations décalés l'un par rapport à l'autre dans la direction du centre de l'assemblage.

## Claims

1. Pressurized water nuclear reactor having a vessel containing a core consisting of prismatic fuel assemblies arranged side by side and vertically beneath an upper core plate (6) which carries a set of vertical tubes (8) for guiding control rods, the guide tubes being located above some of said assemblies of the core and being attached at their upper ends to a support plate (15) joined to the upper core plate (6) by spacers (16), the unit consisting of the guide tubes (8) and their supports (6, 15, 16) being called the upper internal equipment of said reactor and the guide tubes (18) enclosing perforated horizontal plates (20) as discontinuous guide devices and long perforated sleeves (33, 34) as continuous guide devices for guiding the control rods in the vertical direction, characterized in that the reactor operates selectively either with a core comprising a first type of assemblies producing a thermal neutron spectrum, or with a core comprising a second type of assemblies producing an epithermal neutron spectrum, differing from the assemblies of said first type only by the distribution and composition of fuel rods, the guide plates (20) and sleeves (33, 34) in each of said guide tubes (8) comprising a first set of perforations (31, 36) for guiding the control rods associated with the assemblies of said first type and a second set of perforations (30, 35) for guiding the control rods associated with the assemblies of said second type.

2. Nuclear reactor according to claim 1, characterized in that each of the guide plates (20) comprises two different sets of eighteen perforations arranged in staggered relation to one another in the direction toward the center of the assembly.

## Patentansprüche

1. Druckwasserkernreaktor mit einem einen Reaktorkern umschließenden Behälter, wobei der Reaktorkern aus prismatischen, vertikal Seite an Seite unter einer oberen Platte (6) des Reaktorkerns angeordneten Brennelementkassetten besteht, die Platte eine Gruppe von vertikalen Führungsrohren (8) für Steuerstäbe trägt, die oberhalb bestimmter Kassetten des Reaktorkerns angeordnet und mit ihren oberen Enden an einer Trägerplatte (15) befestigt sind, die mit der oberen Platte (6) des Reaktorkerns über Streben (16) verbunden ist und wobei aus den Führungsrohren (8) und deren Trägergliedern (6, 15, 16) bestehende, innere Einrichtung im Oberteil des Reaktors genannte Gruppe und die perforierte horizontale Platten (20) umschließenden Führungsrohre (18) diskontinuierliche Führungsvorrichtungen und perforierte Hülsen (33, 34) kontinuierliche Vorrichtungen für die Führung der Steuerstäbe in vertikaler Richtung bilden, dadurch gekennzeichnet, daß der Kernreaktor entweder mit einem Reaktorkern betrieben wird, der aus Kassetten eines ersten Typs, die ein thermisches Neutronenspektrum erzeugen, oder mit einem Reaktorkern, der aus Kassetten eines zweiten Typs, die ein epithermisches Neutronenspektrum erzeugen und sich von den Kassetten des ersten Typs lediglich durch die Anordnung und die Zusammensetzung der Brennstäbe unterscheiden und daß die Platten (20) und die Hülsen (33, 34) für jedes Führungsrohr (8) eine erste Gruppe Perforationen (31, 36) zur Führung der den Kassetten des ersten Typs zugeordneten Steuerstäbe und eine zweite Gruppe Perforationen (30, 35) zur Führung der den Kassetten des zweiten Typs zugeordneten Steuerstäbe aufweisen.

2. Druckwasserkernreaktor nach Anspruch 1, dadurch gekennzeichnet, daß jede der Führungsplatten (20) zwei verschiedene Gruppen (30, 31) von achtzehn in Richtung auf die Mitte der Kassette mit Abstand zueinander angeordneten Perforationen aufweist.

0 081 430

Fig 1

Fig 2

Fig 3